# EUROPÄISCHE PATENTSCHRIFT

(11) **EP 0 955 481 B1**
(45) Veröffentlichungstag und Bekanntmachung des Hinweises auf die Patenterteilung: **02.11.2005**
(21) Anmeldenummer: 99104846.3
(22) Anmeldetag: 11.03.1999
(51) Int. Cl.: F16D 23/02

(54) **Schiebemuffe einer Synchronisiereinheit für Schaltgetriebe**
Shift sleeve of a synchronizer assembly for a gearbox
Manchon de changement de vitesses d'un assemblage de synchronisation pour une boîte de vitesses

(30) Priorität: 08.05.1998 DE 19820654
(43) Veröffentlichungstag der Anmeldung: 10.11.1999
(73) Patentinhaber: INA-Schaeffler KG, 91074 Herzogenaurach (DE)
(72) Erfinder: Schwuger, Josef, 91315 Höchstadt/Aisch (DE); Sinner, Rudolf, 91088 Bubenreuth (DE); Waldert, Hartwig, 91325 Aisch (DE)

(56) Entgegenhaltungen:
- DE-A- 2 526 685
- DE-A- 3 114 787
- DE-A- 3 908 989
- GB-A- 1 502 346
- GB-A- 2 123 317

## Beschreibung

### Anwendungsgebiet der Erfindung

Schiebemuffe einer Synchronisiereinheit für Schaltgetriebe mit einem durch einen spanlosen Formgebungsprozeß gefertigten Muffenkörper, der an seinem Außenumfang eine Schaltgabel aufnimmt und an seinem Innenumfang eine in Richtung der Längsmittelachse verlaufende Verzahnung aufweist.

### Hintergrund der Erfindung

Eine derartige Schiebemuffe ist beispielsweise aus DE 39 08 989 C2 vorbekannt. Diese wird aus zwei symmetrischen oder annähernd symmetrischen Hälften gebildet, die einzeln im Umformverfahren gefertigt und anschließend durch Fügen miteinander verbunden werden. Jede Symmetriehälfte ist dabei mit einem scheibenförmigen, umlaufenden und radial aus ihrem Außenumfang herausragenden Absatz versehen. Nach dem Fügen der Symmetriehälften bilden die der Quermittelebene der Schiebemuffe zugewandten Stirnflächen der Absätze zusammen mit der durch diese Absätze begrenzten zylindrischen Fläche am Außenumfang die Schaltgabelführung.

Der Innenumfang dieser Schiebemuffe weist eine Verzahnung auf, deren Zähne sich, in ihrem Querschnitt von der Stirnfläche aus gesehen, in Richtung Quermittelebene der Schiebemuffe so verjüngen, daß zentrisch auf der Quermittelebene angeordnete Aussparungen an den Zahnflanken entstehen. Diese Aussparungen an den Zahnflanken stellen sicher, daß die in einem geschalteten Gang ineinandergeschobenen Zähne der Schiebemuffe und der Klauenverzahnung des Kupplungskörpers oder Zahnrades sich insbesondere bei Lastwechseln nicht voneinander lösen. An der Innenverzahnung von Schiebemuffen können außer den Aussparungen an den Zahnflanken beispielsweise auch an/oder zwischen den Zähnen Ausnehmungen und Nuten ausgebildet sein. Weiterhin sind die Enden der Zähne von Schiebemuffen häufig mit Dachschrägen versehen. In die Ausnehmungen greifen die Sperrbolzen der Synchronisiereinrichtung ein, die in der Regel durch eine Feder vorgespannt sind. Die Schiebemuffe wird dadurch bei nicht geschaltetem Gang in ihrer Neutralstellung arretiert. In den Nuten, die in Richtung der Längsmittelachse der Schiebemuffe ausgerichtet sind, werden beispielsweise Druckstücke der Synchronisiereinheit aufgenommen und geführt. Wird die Schiebemuffe zur Wahl eines Ganges in axiale Richtung verschoben, drücken die Druckstücke den Synchronring gegen den Reibkegel des Kupplungskörpers. Die Dachschrägen der Zähne verhindern, daß die Verzahnung der Schiebemuffe während der Synchronisation vorzeitig in die Verzahnung des Kupplungskörpers oder Gangrades einrastet. Ist die Synchronisation abgeschlossen, erleichtern die Dachschrägen das Einrasten in diese Verzahnung.

Es gibt auch Schiebemuffen, bei denen zusätzlich zur Verzahnung am Innenumfang eine Außenverzahnung am Außenumfang des Muffenkörpers ausgebildet ist. In diese Verzahnung greift zum Beispiel ein verschiebbares Zwischenrad des Rückwärtsganges bei sogenannten Kompaktgetrieben ein, wenn sich die Schiebemuffe in einer Schaltstellung zwischen dem ersten und zweiten Gang eines Schaltgetriebes befindet.

Wie bekannt, können im Vergleich zur spanabhebenden Bearbeitung die Fertigungskosten der Schiebemuffe durch eine spanlose Fertigung gesenkt werden. Die beschriebenen Profile, nämlich Aussparungen, Ausnehmungen, Nuten und Dachschrägen können in einstückigen Schiebemuffen nach dem Stand der Technik in durchgängig spanloser Fertigung nicht eingebracht werden. Das ist deshalb nicht möglich, da die Konturen dieser Ausnehmungen sich mit den Konturen beispielsweise eines Ziehstempels überschneiden oder darüber hinausragen, und somit zur Entformungsrichtung des Stempels Hinterschnitte bilden.

Bei einer durchgängigen spanlosen Fertigung von Schiebemuffen werden bisher diese Hinterschnitte dadurch vermieden, daß wie im Beispiel DE 39 08 989 C2 beschrieben der Muffenkörper der Schiebemuffe aus zwei in Einzelfertigung hergestellten Teilen zusammengefügt wird. Die Fügeebene dieser zwei Teile verläuft dabei durch die Teilungsebene der Aussparungen, so daß in Entformungsrichtung beispielsweise eines Ziehstempels keine Hinterschnitte entstehen. Die Fügeebene entspricht in diesem Beispiel auch der Symmetrieebene der Schiebemuffe, da die beiden gefügten Teile der Muffe symmetrisch oder zumindest annähernd symmetrisch ausgebildet sind.

Es gibt Schiebemuffen an deren Innendurchmesser die Ausnehmungen für die Aufnahme der Sperrbolzen und/oder die Nuten zur Führung der Druckstücke auf der Quermittelebene angeordnet sind und die Aussparungen in den Bereichen zwischen der Quermittelebene und den Stirnseiten der Schiebemuffe in die Zahnflanken eingebracht sind. Es ist auch möglich, daß in einen Zahn sowohl eine Nut oder Ausnehmung als auch eine Aussparung an dessen Flanken eingebracht ist. Sollen diese nach dem Stand der Technik ausgebildeten Schiebemuffen durchgängig spanlos gefertigt werden, so sind zur Vermeidung von Hinterschnitten mehr als zwei Fügeebenen vorzusehen und der Muffenkörper wird somit aus mehr als zwei Einzelteilen gebildet. Nachteilig ist, daß mit steigender Anzahl der Einzelteile einer Schiebemuffe auch die Werkzeug- und Fertigungskosten für deren Herstellung steigen. Mit dem Fügen der Muffenteile addieren sich die durch den Fügespalt entstehenden Maß- und Formabweichungen zu den bestehenden Maß- und Formabweichungen der Ausnehmungen, Aussparungen und Nuten. Das wirkt sich nachteilig auf die Präzision der Ausführung der Schiebemuffe aus.

Kann der Muffenkörper auf die beschriebene Art nicht aus mehreren Teilen zusammengefügt werden, so müssen die Ausnehmungen in einem zusätzlichen spanabhebenden Arbeitsgang ausgearbeitet werden. Es entstehen dadurch zusätzliche Bearbeitungs- und Handhabungskosten, die die Fertigungskosten der Schiebemuffe erhöhen.

Am Außenumfang der Symmetriehälften der Schiebemuffe nach DE 39 08 989 C2 ist jeweils ein umlaufender Absatz angeordnet. Nach dem Fügen dieser Symmetriehälften bilden die einander zugewandten Stirnseiten diese Absätze und die von ihnen eingeschlossenen äußere Mantelfläche des Muffenkörpers eine Umfangsnut, die Schaltgabelführung, in die eine Schaltgabel des Schaltgetriebes eingreift. Die Absätze sind Anschläge, über die die axiale Verschiebebewegung von der Schaltgabel auf die Schiebemuffe übertragen wird. Der Fügespalt, der durch das Fügen der Symmetriehälften entsteht, bildet die Quermittelebene der Schiebemuffe und damit auch die Quermittelebene der Schaltgabelführung. Die Maß- und Formabweichungen des Fügespaltes addieren sich somit zu den Maß- und Formabweichungen der Schaltgabelführung. Der Fügespalt wirkt sich auch in diesem Fall nachteilig auf die Präzision der Schiebemuffe aus.

### Zusammenfassung der Erfindung

Aufgabe der Erfindung ist es daher, eine Schiebemuffe der vorgenannten Gattung zu schaffen, die bei kostengünstiger Fertigung eine beliebige Anordnung von Ausnehmungen, Aussparungen und Nuten gestattet und deren Präzision nicht von dieser Anordnung beeinflußt wird.

Diese Aufgabe wird nach dem kennzeichnenden Teil des Anspruches 1 dadurch gelöst, daß der Muffenkörper durch einen spanlosen Formgebungsprozeß aus Blech gefertigt und als einstückiges Bauteil ausgebildet ist. Die Verwendung von Blech als Ausgangsmaterial zur Fertigung von Muffenkörpern oder Schiebemuffen ermöglicht den Einsatz von einfachen Schnitt- und Formwerkzeugen. Profile wie die erwähnte Innenverzahnung, Ausnehmungen, Nuten, Aussparungen und Dachschrägen an der Verzahnung können in flach ausgerichtete Blechstreifen- oder Platinen durch z. B. Prägen, Rollieren und Walzen eingebracht werden. Im Gegensatz zu einem zylindrisch ausgeformten Muffenkörper nach dem Stand der Technik entstehen dabei keine Hinterschnitte in Entformungsrichtung der Werkzeuge. Da diese Profilelemente frei von Hinterschnitten und in beliebiger Anordnung eingebracht werden können, ist eine einstückige Fertigung des Muffenkörpers möglich. Die Fertigungs- und Handhabungskosten für das Fügen von zwei oder mehreren Teilen eines Muffenkörpers entfallen somit. Die Ausbildung der Profilelemente und auch der Schiebemuffe erfolgt in hoher Genauigkeit da keine zusätzlichen Form- und Maßtoleranzen durch Fügespalten entstehen. Nachträgliche spanabhebende Bearbeitungsgänge entfallen.

Ein Vorteil bei der Fertigung von Teilen aus Blech besteht darin, daß die einzelnen Verfahren wie Zuschneiden, Profilieren und Umformen auf einer Fertigungsanlage- oder linie zusammengefaßt werden können. Auf diese Weise werden im Produktionsprozeß Bearbeitungszeiten verkürzt, da Handhabungsschritte und Transportwege- und zeiten entfallen. Besonders geeignet sind diese Fertigungsmethoden für die Herstellung von großen Stückzahlen. Dieser Vorteil kann auch bei der Fertigung eines Muffenkörpers aus Blech, wie in Anspruch 2 beschrieben, genutzt werden. Die Ausgangsform des Muffenkörpers liegt dabei in Form eines profilierten Blechstreifens vor. Die Profilierung enthält alle Elemente wie die Innenverzahnung und deren Nuten, Ausnehmungen, Aussparungen und Dachschrägen. Der Blechstreifen kann z. B. von einem endlosen Bandmaterial mit einer Länge, die dem Umfang des Muffenkörpers entspricht, abgehackt werden. Die endgültige zylindrische Form des Muffenkörpers wird aus diesem Blechstreifen gebildet, der kreisförmig gebogen, an seinen Schnittkanten zusammengeführt und dort verbunden ist. Als bevorzugte Verbindung ist eine Schweißung vorzusehen.

Bei Schiebemuffen gemäß Erfindung wird die Schaltgabelführung am Außenumfang des Muffenkörpers durch einen einstückig mit dem Muffenkörper geformten Absatz oder durch wenigstens einen auf dessen Außenumfang angeordneten Ring gebildet. Eine vorteilhafte Lösung, die einen geringstmöglichen Material- und Fertigungsaufwand erfordert, ist in Anspruch 3 beschrieben. Dabei sind der Muffenkörper und die Schaltgabelführung einstückig ausgebildet. Die Schaltgabelführung besteht dabei aus einem scheibenförmigen, umlaufenden und radial aus dem Außenumfang des Muffenkörpers herausragenden Absatz. Damit die axiale Verschiebebewegung der Schaltgabel des Schaltgetriebes auf die Schiebemuffe übertragen werden kann, umgreifen die Enden der Schaltgabel die Schaltgabelführung. Eine Schiebemuffe dieser Ausführung bietet den Vorteil, daß der Absatz zusammen mit der Innenverzahnung und den anderen Profilierungselementen spanlos in das Blech eingebracht werden kann.

Anspruch 4 beschreibt eine Schiebemuffe, bei der der Muffenkörper und die Schaltgabelführung als Einzelteile gefertigt und anschließend aneinander fixiert werden. Der Vorteil einer derartig gestalteten Schiebemuffe besteht darin, daß bei der Produktion von verschiedenen Schiebemuffen eine Möglichkeit der Mehrfachverwendung von Einzelteilen besteht. Dazu werden die Außendurchmesser verschiedener Muffenkörper und die Innendurchmesser verschiedener Ringe der Schaltgabelführung aneinander angepaßt und in ihrem Durchmesser standardisiert. Unterscheiden sich z. B. zwei Schiebemuffen nur in ihrer Ausführung der Innenverzahnung, so müssen nur unterschiedliche Muffenkörper gefertigt werden. Dabei kann der Muffenkörper wie unter Anspruch 1 und 2 beschrieben, aus Blech gebildet oder als spanlos gefertigtes Massivteil ausgebildet sein. Die Ringe der Schaltgabelführung sind jedoch bei beiden gleich. Sind die Muffenkörper in ihrer Ausführung gleich, müssen nur die Ringe der Schaltgabelführung neu gefertigt werden oder Ringe gleicher Ausführung werden in ihrer Anordnung auf dem Außendurchmesser unterschiedlich kombiniert.

Die Schaltgabelführung kann wie nach Anspruch 5 beschrieben aus einem einzelnen Ring bestehen, der auf dem Außenumfang des Muffenkörpers fixiert wird. Die Schaltgabel umgreift bei dieser Lösung, wie auch bei der Schiebemuffe nach Anspruch 3, die Schaltgabelführung. Gemäß Anspruch 6 wird die Schaltgabelführung aus einem Muffenkörper und zwei auf seinem Außenumfang fixierten Ringen gebildet. Für die Schiebemuffen nach Anspruch 5 und 6 können Ringe der gleichen Ausführung eingesetzt werden. Bei Schiebemuffen mit aus zwei Ringen gebildeten Schaltgabelführungen ergeben sich weitere Kombinationsmöglichkeiten. Es können für eine Schiebemuffe Ringe unterschiedlicher Ausführungen verwendet werden und/oder die Ringe werden von Schiebemuffe zu Schiebemuffe mit unterschiedlichen Abständen zueinander fixiert.

Eine weitere vorteilhafte Ausgestaltung einer spanlos geformten Schiebemuffe beschreibt Anspruch 7, wonach die Ringe der Schaltgabelführung in einem spanlosen Formgebungsprozeß gefertigt sind. Besonders kostengünstig und mit geringstem Materialeinsatz kann ein Ring hergestellt werden, wenn er aus Draht oder einem Blechstreifen gefertigt wird. Eine mögliche Ausführung eines solchen Ringes ist in Anspruch 8 beschrieben. Der Ring hat einen U-förmigen Querschnitt, dessen Schenkel in radialer Richtung nach außen gerichtet sind. Zur Fertigung dieses Ringes können ähnliche oder gleiche Methoden wie zur Herstellung des Muffenkörpers angewendet werden. Im Schaltgetriebe greift die Schaltgabel zwischen die beiden Schenkel dieses Ringes und wird dort geführt. Vorteile dieser Lösung ergeben sich daraus, daß nur ein Ring auf dem Außenumfang des Muffenkörpers fixiert wird, die Führung der Schaltgabel jedoch wie bei einer Schiebemuffe mit zwei Ringen erfolgt. Die Handhabungs- und Montagekosten für die Befestigung eines zweiten Ringes entfallen somit.

Die Ringe der Schaltgabelführung können durch Schweißen oder Aufschrumpfen auf dem Außenumfang des Muffenkörpers fixiert werden. Eine Variante, wie ein Ring der Schaltgabelführung, der mit einem Schrumpfsitz auf dem Muffenkörper fixiert ist, zusätzlich gegen axiale Verschiebekräfte gesichert werden kann, ist in Anspruch 9 beschrieben. Am Innendurchmesser des Ringes der Schaltgabelführung befindet sich eine umlaufende Innennut und am Außenumfang des Muffenkörpers befindet sich ein umlaufender nach außen gerichteter Absatz mit der Höhe H. Zum Aufschrumpfen auf den Muffenkörper wird der Ring erwärmt und dehnt sich aus. Sein Innendurchmesser vergrößert sich mit der Wärmedehnung. Die Höhe H des nach außen gerichteten Absatzes ist dieser Wärmedehnung des Ringes angepaßt, d. h. der nach außen gerichtete Absatz darf maximal so hoch sein, daß der erwärmte Ring bei seiner Montage über diesen geschoben werden kann. Der Ring wird bei seiner Montage über den nach außen gerichteten Absatz geschoben und positioniert. Beim Abkühlen und Schrumpfen des Ringes umgreift die Nut den nach außen gerichteten Absatz. Damit ist der Ring zusätzlich zum Schrumpfsitz in seiner Lage gesichert.

In einer weiteren Ausgestaltung der Erfindung ist nach Anspruch 10 am Innendurchmessers des Ringes der Schaltgabelführung ein nach innen gerichteter Absatz ausgebildet. Dieser wird von einer am Außendurchmesser des Muffenkörpers umlaufenden äußeren Nut umgriffen, wenn der Ring der Schaltgabelführung durch einen Schrumpfsitz auf dem Muffenkörper fixiert ist. Dabei ist die Höhe HI des Absatzes am Innendurchmesser des Ringes so ausgebildet, daß der für seine Montage erwärmte Ring auf den Außendurchmesser des Muffen örpers geschoben werden kann.

Anspruch 11 kennzeichnet einen einen Muffenkörper, an dessen Außenumfang ein Anschlag eingebracht ist, an dem der oder die Ringe der Schaltgabelführung ausgerichtet sind. Mit einem derartig gestalteten Muffenkörper wird die Montage die Ringe der Schaltgabelführung auf den Muffenkörper erleichtern.

Die Innenverzahnung des Muffenkörpers ist, wie in Anspruch 12 beschrieben, mit einer symmetrisch oder asymmetrisch ausgebildeten Dachschräge 20 versehen, die insbesondere bei Schiebemuffen für Synchroneinrichtungen mit Sperrverzahnung zur Anwendung kommt.

Für Schiebemuffen mit einer Außenverzahnung sieht eine weitere Ausgestaltung der Erfindung vor, daß wie in Anspruch 13 oder 14 beschrieben, diese Außenverzahnung entweder in einem Ring der Schaltgabelführung eingebracht oder am Außenumfang des Muffenkörpers ausgebildet ist. Die Außenverzahnung ist vorzugsweise durch einen spanlosen Formgebungsprozeß eingebracht. Vorstellbar ist auch, daß der Ring mit Außenverzahnung durch Stanzen gefertigt ist.

### Kurze Beschreibung der Zeichnung

Die Erfindung wird nachfolgend anhand mehrerer Ausführungsbeispiele erläutert. Es zeigen:
- Figur 1: einen Längsschnitt durch eine erfindungsgemäße Schiebemuffe, bei der ein Muffenkörper an seinem Außenumfang eine durch zwei Scheiben gebildete Schaltgabelführung aufnimmt;
- Figur 2: eine vergrößerte Ansicht eines Zahnes aus Figur 1 im Schnitt entlang der Linie II;
- Figur 3: einen Ausschnitt aus einer stirnseitigen Ansicht der Schiebemuffe nach Figur 1 mit einem Teilschnitt durch einen Zahn;
- Figur 4: eine im Längsschnitt dargestellte erfindungsgemäße einstückige Schiebemuffe;
- Figur 5: eine im Längsschnitt dargestellte erfindungsgemäße Schiebemuffe mit einer aus einem einzelnen Ring hergestellten Schaltgabelführung;
- Figur 6: eine im Schnitt dargestellte erfindungsgemäße Schiebemuffe mit einer Schaltgabelführung aus einem U-förmigen Ring, dessen Innennut den äußeren Absatz des Muffenkörpers umgreift.
- Figur 7: eine im Schnitt dargestellte erfindungsgemäße Schiebemuffe mit einer Schaltgabelführung aus einem U-förmigen Ring, dessen nach innen gerichteter Absatz von einer äußeren Nut des Muffenkörpers umgriffen wird.
- Figur 8: eine im Schnitt dargestellte erfindungsgemäße Schiebemuffe mit einer Schaltgabelführung aus zwei Ringen, wobei an einem Ring eine Außenverzahnung ausgebildet ist.
- Figur 9: eine im Schnitt dargestellte erfindungsgemäße Schiebemuffe, an deren Muffenkörper eine Außenverzahnung ausgebildet ist.

### Detaillierte Beschreibung der Zeichnung

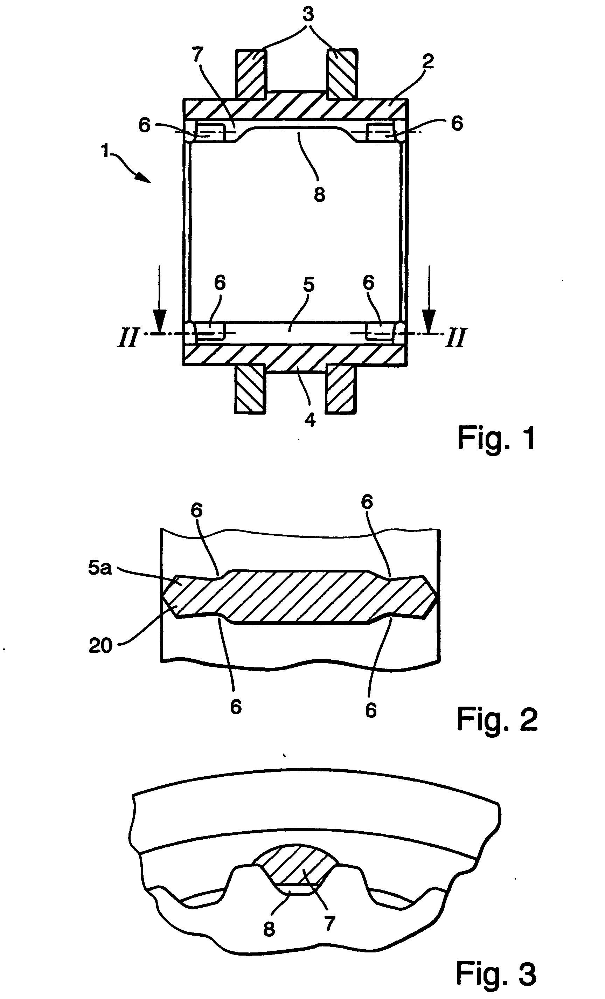

In Figur 1 ist mit 1 eine Schiebemuffe bezeichnet, die aus einem durch spanlose Formgebung aus Blech gefertigten Muffenkörper 2 und zwei beispielhaft einen rechteckigem Querschnitt aufweisenden Ringen 3 besteht. Am Außenumfang des Muffenkörpers 2 ist ein als radialer Bund ausgebildeter Anschlag 4 angeordnet. Dieser Anschlag 4 ist in Figur 1 beispielhaft umlaufend und nicht unterbrochen dargestellt. An seinem Innendurchmesser weist der Muffenkörper 2 eine Innenverzahnung 5 auf. Der Absatz 4 und die Innenverzahnung 5 sind unmittelbar in dem Muffenkörper 2 ausgebildet. Die Ringe 3 sind, zueinander parallel und symmetrisch zu einer Quermittelebene des Muffenkörpers 2 angeordnet, am Anschlag 4 ausgerichtet und in diesem Beispiel durch einen Preßsitz in ihrer Lage fixiert. Die der Quermittelebene der Schiebemuffe zugewandten Stirnseiten der Ringe 3 und die Mantelfläche des Anschlages 4 bilden die Schaltgabelführung.

In Figur 1 und Figur 2 sind Aussparungen 6 dargestellt, die in die Zahnflanken der Zähne 5a und 7 mittels spanlosem Unformverfahren eingebracht sind. Figur 2, eine bildliche Darstellung eines geschnittenen Zahnes 5a, dient zur Darstellung der Dachschrägen 20 und der hintergeschnittenen Konturen der Aussparungen 6. Einzelne Zähne 7 der Innenverzahnung 5 weisen Nuten 8 auf. Die Nuten 8, die in Längsrichtung der Zähne verlaufen, dienen zur Aufnahme von nicht bildlich dargestellten Druckstücken der Synchronisiereinrichtung. In Figur 3 wird in einer um 90° gedrehten Ansicht aus Figur 1 ein Teilschnitt durch einen Zahn 7 mit der Nut 8 dargestellt.

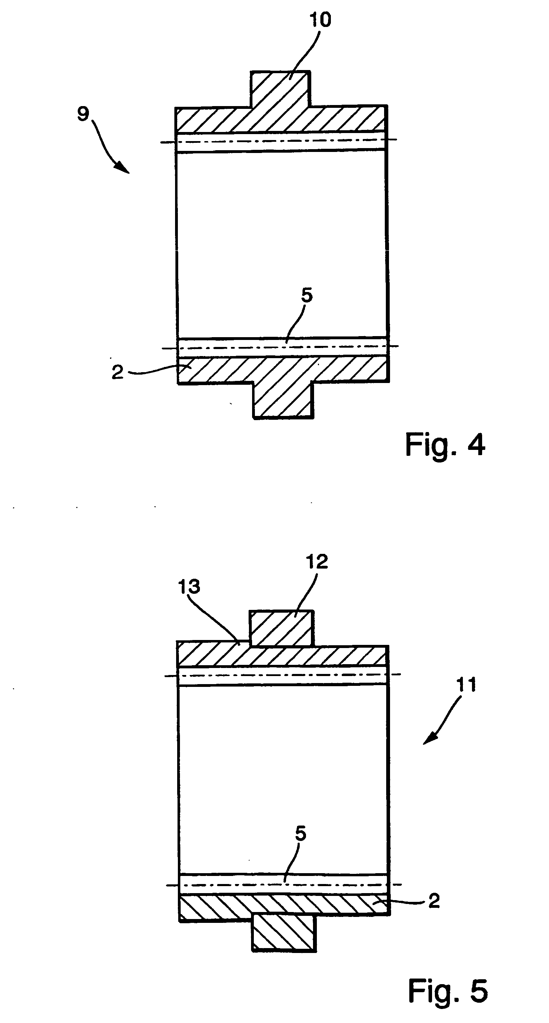

Figur 4 zeigt eine Schiebemuffe 9, die einstückig aus dem Muffenkörper 2 mit Innenverzahnung 5 und einem Absatz 10 gebildet wird. Der Absatz 10 ist auf der Quermittelebene der Schiebemuffe angeordnet und bildet mit seiner Mantelfläche, seinen Stirnflächen und den Mantelflächen des Muffenkörpers 2 die Schaltgabelführung.

Ein weiteres Beispiel einer Schiebemuffe ist in Figur 5 dargestellt. Die Schiebemuffe 11 ist zweiteilig ausgebildet. Auf den einteiligen Muffenkörper 2 mit Verzahnung 5 und Anschlag 13 ist ein einzelner Ring 12 fixiert. Das Fixieren des einzelnen Ringes 12 auf den Muffenkörper 2 erfolgt in diesem Beispiel durch einen Schrumpfsitz. Der in dieser Abbildung beispielhaft mit rechteckigem Querschnitt dargestellte Ring 12 wird bei seiner Montage auf den Muffenkörper 2 am Anschlag 13 positioniert und ausgerichtet.

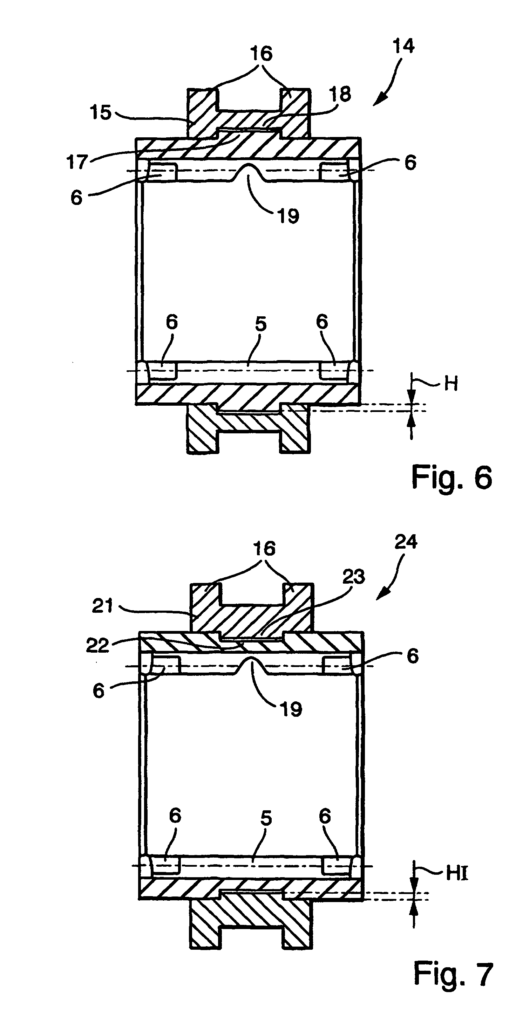

Die Schiebemuffe 14 nach Figur 6 besteht aus einem Muffenkörper 2 mit Innenverzahnung 5 und einem Ring 15. In die Innenverzahnung 5 sind Aussparungen 6 eingebracht und aus einem Zahn dieser Innenverzahnung 5 ist eine Ausnehmung 19 ausgearbeitet. In die Ausnehmung 19 greift ein nicht bildlich dargestellter Sperrbolzen der Synchronisiereinrichtung ein. Der Ring 15 ist in seinem Querschnitt gesehen U-förmig ausgebildet. Die beiden Schenkel 16 des Ringes 15 sind dabei in radialer Richtung nach außen gerichtet. Die zur Quer mittelebene der Schiebemuffe weisenden Stirnseiten der Schenkel 16 und die von ihnen eingeschlossene Mantelfläche des Ringes 15 bilden die Schaltgabelführung. Eine Innennut 18 am Innenumfang des Ringes 15 umgreift den einstückig mit dem Muffenkörper 2 ausgebildeten nach außen gerichteten Absatz 17.

Figur 7 zeigt eine Schiebemuffe 24, die in ihrer Ausführung im wesentlichen der Schiebemuffe 14 entspricht. Auf ihren Außenumfang sitzt jedoch ein Ring 21 mit U-förmigen Querschnitt, der an dessn Innendurchmesser ein nach innen gerichteter Absatz ausgebildet ist. Dieser Absatz 23 wird von einer Außennut 22 umgriffen, die am Außendurchmesser des Muffenkörpers 2 in umfangsrichtung verläuft.

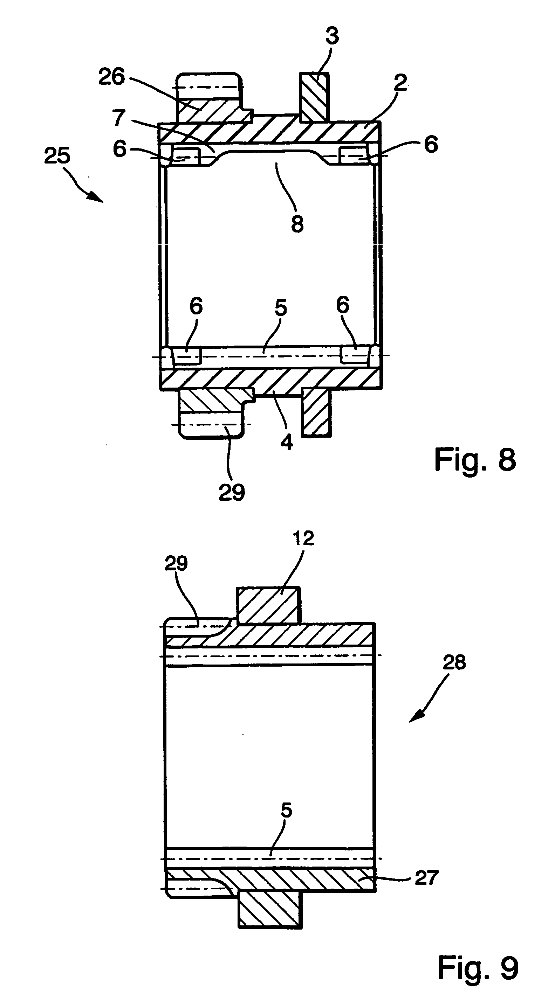

In Figur 8 ist mit 25 eine Schiebemuffe bezeichnet, an deren Außenumfang ein Ring 3 und ein weiterer Ring 26 mit Außenverzahnung fixiert sind.

Figur 9 zeigt eine Schiebemuffe 28, an deren Muffenkörper 27 eine Außenverzahnung 29 ausgebildet ist.

### Bezugszeichen

- 1: Schiebemuffe
- 2: Muffenkörper
- 3: Ring
- 4: Anschlag
- 5: Innenverzahnung
- 5a: Zahn der Innenverzahnung
- 6: Aussparung
- 7: Zahn mit Nut
- 8: Nut
- 9: einstückige Schiebemuffe
- 10: Absatz
- 11: Schiebemuffe
- 12: einzelner Ring
- 13: Anschlag
- 14: Schiebemuffe
- 15: Ring mit U-förmigem Querschnitt
- 16: Schenkel
- 17: nach außen gerichteter Absatz
- 18: Innennut
- 19: Ausnehmung
- 20: Dachschräge
- 21: Ring mit U-förmigem Querschnitt
- 22: Außennut
- 23: nach innen gerichteter Absatz
- 24: Schiebemuffe
- 25: Schiebemuffe
- 26: Ring mit Außenverzahnung
- 27: Muffenkörper mit Außenverzahnung
- 28: Schiebemuffe
- 29: Außenverzahnung

## Patentansprüche

1. Schiebemuffe (1, 9, 11, 14) einer Synchronisiereinheit für Schaltgetriebe mit einem durch einen spanlosen Formgebungsprozeß gefertigten Muffenkörper (2), der an seinem Außenumfang eine Schaltgabelführung aufnimmt und an seinem Innenumfang eine in Richtung der Längsmittelachse verlaufende Verzahnung (5) aufweist, **dadurch gekennzeichnet, daß** der Muffenkörper (2) durch einen spanlosen Formgebungsprozeß aus Blech gefertigt und als einstückiges Bauteil ausgebildet ist.

2. Schiebemuffe einer Synchronisiereinheit für Schaltgetriebe nach Anspruch 1, **dadurch gekennzeichnet, daß** der Muffenkörper (2) in seinem Ausgangszustand aus einem zumindest einseitig profilierten Blechstreifen besteht, der kreisförmig gebogen ist und dessen Schnittkanten dabei zusammengeführt und miteinander verbunden sind.

3. Schiebemuffe einer Synchronisiereinheit für Schaltgetriebe, nach Anspruch 1 **dadurch gekennzeichnet, daß** der Muffenkörper (2) und die Schaltgabelführung einstückig ausgebildet sind, und die Schaltgabelführung durch einen scheibenförmigen, umlaufenden und radial aus dem Außenumfang des Muffenkörpers (2) herausragenden Absatz (10) gebildet ist.

4. Schiebemuffe einer Synchronisiereinheit für Schaltgetriebe nach Anspruch 1, **dadurch gekennzeichnet, daß** der Muffenkörper (2) und die Schaltgabelführung als Einzelteile gefertigt und anschließend aneinander fixiert sind.

5. Schiebemuffe einer Synchronisiereinheit für Schaltgetriebe, nach Anspruch 1 **dadurch gekennzeichnet, daß** die Schaltgabelführung aus einem einzigen Ring (12) besteht, der auf dem Außenumfang des Muffenkörpers (2) fixiert ist.

6. Schiebemuffe einer Synchronisiereinheit für Schaltgetriebe nach Anspruch 1, **dadurch gekennzeichnet, daß** die Schaltgabelführung durch zwei parallel zueinander ausgerichtete Ringe (3) gebildet wird, die auf dem Außenumfang des Muffenkörpers (2) fixiert sind.

7. Schiebemuffe einer Synchronisiereinheit für Schaltgetriebe nach Anspruch 1, **dadurch gekennzeichnet, daß** wenigstens ein Ring (3, 12, 15) der Schaltgabelführung durch einen spanlosen Formgebungsprozeß gefertigt ist.

8. Schiebemuffe einer Synchronisiereinheit für Schaltgetriebe nach Anspruch 1, **dadurch gekennzeichnet, daß** die Schaltgabelführung aus einem im Querschnitt gesehenen U-förmigen Ring (15) gebildet wird, dessen Schenkel (16) in radialer Richtung nach aussen gerichtet sind und der auf dem Außenumfang des Muffenkörpers (2) fixiert ist.

9. Schiebemuffe einer Synchronisiereinheit für Schaltgetriebe nach Anspruch 1, **dadurch gekennzeichnet, daß** wenigstens ein die Schaltgabelführung bildender Ring (15) durch einen Schrumpfsitz auf dem Muffenkörper (2) fixiert ist, wobei eine an der Innenfläche des Ringes (15) umlaufende Innennut (18) einen an der Außenfläche des Muffenkörpers (2) umlaufenden nach außen gerichteten Absatz (17) umgreift, und wobei die Höhe H des nach außen gerichteten Absatzes (17) so gestaltet ist, daß der erwärmte Ring (15) beim Aufschrumpfen über den nach außen gerichteten Absatz (17) geschoben werden kann.

10. Schiebemuffe einer Synchroneinheit für Schaltgetriebe nach Anspruch 1, **dadurch gekennzeichnet, daß** wenigstens ein die Schaltgabelführung bildender Ring (21) durch einen Schrumpfsitz auf dem Muffenkörper (2) fixiert ist, wobei eine am Außenumfang des Muffenkörpers (2) umlaufende Außennut (22) einen an der Innenfläche des Ringes (21) umlaufenden nach innen gerichteten Absatz (23) umgreift, und wobei die Höhe (HI) des inneren Absatzes (23) so gestaltet ist, daß der erwärmte Ring (21) beim Aufschrumpfen über den Außendurchmesser des Muffenkörpers (2) geschoben werden kann.

11. Schiebemuffe einer Synchronisiereinheit für Schaltgetriebe nach Anspruch 1, **dadurch gekennzeichnet, daß** wenigstens ein die Schaltgabelführung bildender Ring (3, 12) an einem einstückig mit dem Muffenkörper (2) gebildeten axialen Anschlag (4, 13) ausgerichtet ist.

12. Schiebemuffe einer Synchronisiereinrichtung für Schaltgetriebe nach Anspruch 1, **dadurch gekennzeichnet, daß** die Zähne (5a, 7) an ihren Enden jeweils mit einer symmetrischen oder asymmetrischen Dachschräge (20) versehen sind.

13. Schiebemuffe einer Synchronisiereinheit nach Anspruch 1, **dadurch gekennzeichnet, daß** die Schaltgabelführung durch einen Ring (3) und einen weiteren Ring (26) die parallel zueinander ausgerichtet auf dem Außenumfang des Muffenkörpers fixiert sind, gebildet wird, wobei am Außenumfang des Ringes (26) eine in Richtung der Längsmittelachse der Schiebemuffe (25) verlaufende Außenverzahnung (29) ausgebildet ist.

14. Schiebmuffe einer Synchronisiereinheit nach Anspruch 1, **dadurch gekennzeichnet, daß** am Außenumfang des Muffenkörpers (27) eine in Richtung der Längsmittelachse der Schiebmuffe (28) verlaufende Außenverzahnung (29) ausgebildet ist.

## Claims

1. Sliding sleeve (1, 9, 11, 14) of a synchroniser unit for manual transmissions, which sliding sleeve has a sleeve body (2) that is made by a non-chipping shaping procedure and receives a gearshift fork guide on its outer periphery while comprising a gearing (5) extending in the direction of the central longitudinal axis on its inner periphery, **characterised in that** the sleeve body (2) is made by a non-chipping shaping procedure out of sheet metal and is configured as a one-piece component.

2. Sliding sleeve of a synchroniser unit for manual transmissions according to Claim 1, **characterised in that**, in its initial state, the sleeve body (2) is made from a sheet metal strip profiled at least on one side, the strip is bent into a circular shape and its cut ends are brought together and joined to each other.

3. Sliding sleeve of a synchroniser unit for manual transmissions according to Claim 1, **characterised in that** the sleeve body (2) and the gearshift fork guide are made in one piece with each other, the gearshift fork guide being formed by a disc-shaped circumferential shoulder (10) projecting radially out of the outer periphery of the sleeve body (2).

4. Sliding sleeve of a synchroniser unit for manual transmissions according to Claim 1, **characterised in that** the sleeve body (2) and the gearshift fork guide are made as separate parts and are then fixed to each other.

5. Sliding sleeve of a synchroniser unit for manual transmissions according to Claim 1, **characterised in that** the gearshift fork guide consists of a single ring (12) which is fixed on the outer periphery of the sleeve body (2).

6. Sliding sleeve of a synchroniser unit for manual transmissions according to Claim 1, **characterised in that** the gearshift fork guide is formed by two rings (3) arranged parallel to each other and fixed on the outer periphery of the sleeve body (2).

7. Sliding sleeve of a synchroniser unit for manual transmissions according to Claim 1, **characterised in that** at least one ring (3, 12, 15) of the gearshift fork guide is made by a non-chipping shaping procedure.

8. Sliding sleeve of a synchroniser unit for manual transmissions according to Claim 1, **characterised in that** the gearshift fork guide is formed by a ring (15) which, as viewed in cross-section, is U-shaped, legs (16) of said ring are directed outwards in radial direction and said ring is fixed on the outer periphery of the sleeve body (2).

9. Sliding sleeve of a synchroniser unit for manual transmissions according to Claim 1, **characterised in that** at least one ring (15) forming the gearshift fork guide is fixed on the sleeve body (2) by shrink-fitting, a circumferential internal groove (18) on the inner surface of the ring (15) engages around a circumferential, outwards directed shoulder (17) arranged on the outer surface of the sleeve body (2), and the height H of the outwards directed shoulder (17) is configured such that the heated ring (15) can be pushed over the outwards directed shoulder (17) during shrink-fitting.

10. Sliding sleeve of a synchroniser unit for manual transmissions according to Claim 1, **characterised in that** at least one ring (21) forming the gearshift fork guide is fixed on the sleeve body (2) by shrink-fitting, a circumferential external groove (22) on the outer periphery of the sleeve body (2) engages around a circumferential, inwards directed shoulder (23) arranged on the inner surface of the ring (21), and the height (H1) of the inner shoulder (23) is configured such that the heated ring (21) can be pushed over the outer diameter of the sleeve body (2) during shrink-fitting.

11. Sliding sleeve of a synchroniser unit for manual transmissions according to Claim 1, **characterised in that** at least one ring (3, 12) forming the gearshift fork guide is trued on an axial stop (4, 13) formed integrally on the sleeve body (2).

12. Sliding sleeve of a synchroniser unit for manual transmissions according to Claim 1, **characterised in that** the teeth (5a, 7) are provided with a symmetric or an asymmetric roof slope (20) on their ends.

13. Sliding sleeve of a synchroniser unit according to Claim 1, **characterised in that** the gearshift fork guide is formed by a ring (3) and a further ring (26), which rings are fixed on the outer periphery of the sleeve body in parallel orientation to each other, and an external gearing (29) extending in the direction of the central longitudinal axis of the sliding sleeve (25) is configured on the outer periphery of the ring (26).

14. Sliding sleeve of a synchroniser unit according to Claim 1, **characterised in that** an external gearing (29) extending in the direction of the central longitudinal axis of the sliding sleeve (28) is configured on the outer periphery of the sleeve body (27).

## Revendications

1. Manchon coulissant (1, 9, 11, 14) d'un ensemble de synchronisation pour boîtes de vitesses manuelles, ledit manchon coulissant comprenant un corps (2) de manchon fabriqué par un procédé de formage sans enlèvement de copeaux qui reçoit, sur sa périphérie extérieure, un guide de fourchette de changement de vitesse et qui comprend, sur sa périphérie intérieure, une denture (5) qui s'étend en direction de l'axe longitudinal central, **caractérisé en ce que** le corps (2) de manchon est fabriqué en tôle par un procédé de formage sans enlèvement de copeaux et est configuré sous la forme d'un composant monobloc.

2. Manchon coulissant d'un ensemble de synchronisation pour boîtes de vitesses manuelles selon la revendication 1, **caractérisé en ce que**, à son état de départ, le corps (2) de manchon est fait en un feuillard en tôle profilé au moins d'un côté et plié en forme circulaire, les arêtes de coupe du feuillard étant réunies et reliées, l'une à l'autre.

3. Manchon coulissant d'un ensemble de synchronisation pour boîtes de vitesses manuelles selon la revendication 1, **caractérisé en ce que** le corps (2) de manchon et le guide de fourchette de changement de vitesse sont configurés en une seule pièce, l'un avec l'autre, le guide de fourchette de changement de vitesse étant formé par une épaule (10) périphérique en forme de disque qui fait radialement saillie à partir de la périphérie extérieure du corps (2) de manchon.

4. Manchon coulissant d'un ensemble de synchronisation pour boîtes de vitesses manuelles selon la revendication 1, **caractérisé en ce que** le corps (2) de manchon et le guide de fourchette de changement de vitesse sont fabriqués sous la forme de pièces séparées et sont fixés ensuite l'un à l'autre.

5. Manchon coulissant d'un ensemble de synchronisation pour boîtes de vitesses manuelles selon la revendication 1, **caractérisé en ce que** le guide de fourchette de changement de vitesse consiste en un seul anneau (12) qui est fixé sur la périphérie extérieure du corps (2) de manchon.

6. Manchon coulissant d'un ensemble de synchronisation pour boîtes de vitesses manuelles selon la revendication 1, **caractérisé en ce que** le guide de fourchette de changement de vitesse est formé par deux anneaux (3), orientés parallèlement, l'un à l'autre, qui sont fixés sur la périphérie extérieure du corps (2) de manchon.

7. Manchon coulissant d'un ensemble de synchronisation pour boîtes de vitesses manuelles selon la revendication 1, **caractérisé en ce que**, au moins un anneau (3, 12, 15) du guide de fourchette de changement de vitesse est fabriqué par un procédé de formage sans enlèvement de copeaux.

8. Manchon coulissant d'un ensemble de synchronisation pour boîtes de vitesses manuelles selon la revendication 1, **caractérisé en ce que** le guide de fourchette de changement de vitesse est formé par un anneau (15) qui, vu en section droite, a la forme de U dont les branches (16) sont orientées vers l'extérieur en direction radiale, et ledit anneau est fixé sur la périphérie extérieure du corps (2) de manchon.

9. Manchon coulissant d'un ensemble de synchronisation pour boîtes de vitesses manuelles selon la revendication 1, **caractérisé en ce que**, au moins l'un des anneaux (15) formant le guide de fourchette de changement de vitesse est fixé sur le corps (2) de manchon par ajustement fretté, une rainure périphérique intérieure (18) agencée sur la surface intérieure de l'anneau (15) entoure une épaule (17) périphérique qui est agencée sur la surface extérieure du corps (2) de manchon en étant orientée vers l'extérieur, et l'hauteur H de l'épaule (17) orientée vers l'extérieur est choisie de telle sorte que l'anneau (15) chauffé peut être poussé, lors du frettage, par-dessus l'épaule (17) orientée vers l'extérieur.

10. Manchon coulissant d'un ensemble de synchronisation pour boîtes de vitesses manuelles selon la revendication 1, **caractérisé en ce que,** au moins l'un des anneaux (21) formant le guide de fourchette de changement de vitesse est fixé sur le corps (2) de manchon par ajustement fretté, une rainure périphérique extérieure (22) agencée sur la périphérie extérieure du corps (2) de manchon entoure une épaule (23) périphérique qui est agencée sur la surface intérieure de l'anneau (21) en étant orientée vers l'intérieur, et l'hauteur (H1) de l'épaule (23) intérieure est choisie de telle sorte que l'anneau (21) chauffé peut être poussé, lors du frettage, par-dessus le diamètre extérieur du corps (2) de manchon.

11. Manchon coulissant d'un ensemble de synchronisation pour boîtes de vitesses manuelles selon la revendication 1, **caractérisé en ce que**, au moins l'un des anneaux (3, 12) formant le guide de fourchette de changement de vitesse est dégauchi sur un arrêt axial (4, 13) qui est solidaire au corps (2) de manchon.

12. Manchon coulissant d'un ensemble de synchronisation pour boîtes de vitesses manuelles selon la revendication 1, **caractérisé en ce que** les dents (5a, 7) son munies à leurs extrémités d'une pente (20) en toit symétrique ou asymétrique.

13. Manchon coulissant d'un ensemble de synchronisation selon la revendication 1, **caractérisé en ce que** le guide de fourchette de changement de vitesse est formé par un anneau (3) et par un autre anneau (26), ces deux anneaux étant fixés sur la périphérie extérieure du corps de manchon en étant orientés en parallèle, l'un à l'autre, et **en ce que**, sur la périphérie extérieure de l'anneau (26) est configurée une denture extérieure (29) qui s'étend en direction de l'axe longitudinal central du manchon coulissant (25).

14. Manchon coulissant d'un ensemble de synchronisation selon la revendication 1, **caractérisé en ce que** une denture extérieure (29) qui s'étend en direction de l'axe longitudinal central du manchon coulissant (28) est configurée sur la périphérie extérieure du corps (27) de manchon.
